# EUROPEAN PATENT APPLICATION

(11) **EP 4 434 778 A1**
(43) Date of publication of application: **25.09.2024**
(21) Application number: 22894874.1
(22) Date of filing: 17.11.2022
(51) Int. Cl.: B60H 1/00

(54) **FLUID CONTROL ASSEMBLY AND HEAT MANAGEMENT SYSTEM**

(30) Priority: 17.11.2021 CN 202111363369
(71) Applicant: Zhejiang Sanhua Automotive Components Co., Ltd., Hangzhou, Zhejiang 310018 (CN)
(72) Inventor: HE, Deping, Hangzhou Economic & Technological Development Area Hangzhou, Zhejiang 310018 (CN); YE, Keli, Hangzhou Economic & Technological Development Area Hangzhou, Zhejiang 310018 (CN); SONG, Bin, Hangzhou Economic & Technological Development Area Hangzhou, Zhejiang 310018 (CN)
(74) Representative: Maikowski & Ninnemann Patentanwälte Partnerschaft mbB
(86) International application number: PCT/CN2022/132474
(87) International publication number: WO 2023/088342

(57) **Abstract**

A fluid control assembly and a heat management system. The fluid control assembly (100) comprises a communication channel and heat exchange channels. The heat exchange channels comprise a first channel (406) and a second channel (408). The communication channel is in communication with a flow channel of a fluid management element. The flow channel of the fluid management element is in communication with the first channel (406). At least a portion of the first channel (406) is disposed close to at least a portion of the second channel (408), and working fluid within the portions of the first channel (406) and the second channel (408) which are close to one another can exchange heat.

## Description

This application claims the benefit of the priority to Chinese Patent Application No. 202111363369.5, titled "FLUID CONTROL ASSEMBLY AND HEAT MANAGEMENT ASSEMBLY", filed with the China National Intellectual Property Administration on November 17, 2021, which is incorporated herein by reference in its entirety.

### FIELD

The present application relates to the technical field of fluid control, and in particular to a fluid control assembly and a heat management system.

### BACKGROUND

A fluid control assembly can be applied to a heat management system, which includes an intermediate heat exchanger. In the related art, the fluid control assembly is connected with the intermediate heat exchanger through pipelines, which is not beneficial to the spatial layout and the miniaturization of the heat management system.

### SUMMARY

An object according to the present application is to provide a fluid control assembly and a heat management system, so as to obtain miniaturization of the heat management system.

To achieve the above object, the following technical solution is provided according to the present application:

A fluid control assembly includes a fluid management element and a passage element. The fluid management element includes at least one of a condenser and a liquid reservoir element, the fluid management element is connected with the passage element, the passage element has passages, the passages include a communication passage and heat exchange passages, the heat exchange passages include a first passage and a second passage, the communication passage is in communication with a flow passage of the fluid management element, the flow passage of the fluid management element is in communication with the first passage, at least a portion of the first passage is arranged close to at least a portion of the second passage, and working fluids in the parts, close to each other, of the first passage and the second passage are able to exchange heat with each other.

A heat management system includes a fluid control assembly. The fluid control assembly is the fluid control assembly as described above, the heat management system includes a condenser, an evaporator, and an expansion element, the first passage is located after the condenser and before the expansion element, and the second passage is located after the evaporator.

The fluid control assembly and the heat management system are provided according to the present application, which includes the communication passage and the heat exchange passages. The heat exchange passages include the first passage and the second passage, the communication passage is in communication with the flow passage of the fluid management element, the flow passage of the fluid management element is in communication with the first passage, at least a part of the first passage is arranged close to at least a part of the second passage, and the working fluids in the at least of parts, close to each other, of the first passage and the second passage can exchange heat with each other. Compared with the external intermediate heat exchanger or the integrated intermediate heat exchanger, the passage element of the fluid control assembly not only has the communication passage but also has the heat exchange passages, which is beneficial to the miniaturization of the fluid control assembly, the spatial layout and miniaturization of the heat management system.

### BRIEF DESCRIPTION OF THE DRAWINGS

FIG. 1 is a front view of an embodiment of a fluid control assembly;
FIG. 2 is a schematic perspective view of a passage element in FIG. 1;
FIG. 3 is a schematic exploded view of a flow passage plate and a first covering plate in FIG. 1;
FIG. 4 is a schematic perspective view of the flow passage plate in FIG. 3;
FIG. 5 is a schematic cross-sectional view of a valve mounting seat in FIG. 2;
FIG. 6 is a front view of the fluid control assembly in FIG. 1 in which the first covering plate is hidden;
FIG. 7 is a schematic perspective view of the fluid control assembly in FIG. 1;
FIG. 8 is a schematic perspective view of a traction block in FIG. 7;
FIG. 9 is a schematic perspective view of a liquid reservoir element mounting seat in FIG. 2;
FIG. 10 is a schematic perspective view of a main body of a liquid reservoir element;
FIG. 11 is a schematic exploded view of a multi-way valve element in FIG. 1;
FIG. 12 is a schematic perspective view of the multi-way valve in FIG. 11;
FIG. 13 is a schematic view showing a first operation mode of an embodiment of a heat management system to which the fluid control assembly in FIG. 1 is applied; and
FIG. 14 is a schematic view of a second operation mode of the heat management module in FIG. 13.

### DETAILED DESCRIPTION OF THE EMBODIMENTS

The features and exemplary embodiments of various aspects of the present application are described in detail below. To make the objects, solutions and advantages of the present application more clear and apparent, the present application is described in detail in conjunction with the drawings and the specific embodiments. Moreover, relational terms such as "first" and "second" etc. are only used to distinguish one element from another having the same name and do not necessarily require or imply any such actual existence of relationship or order between those elements.

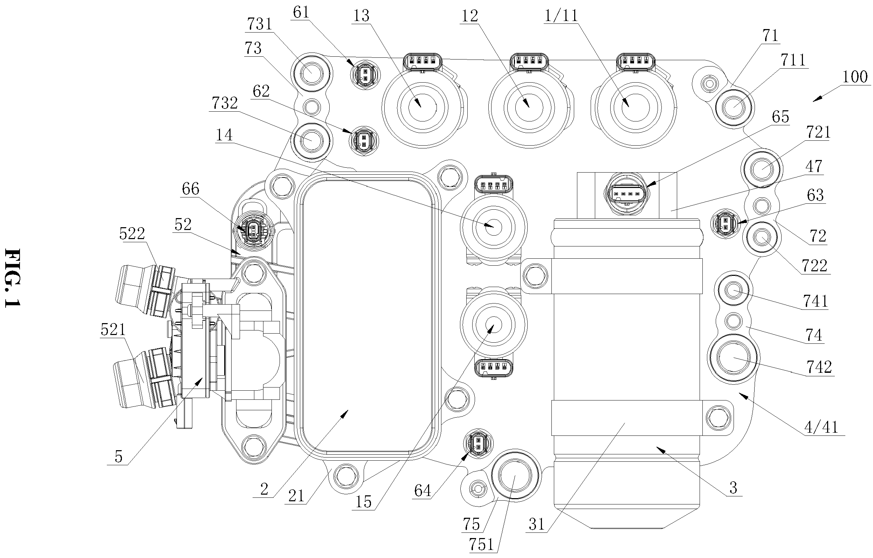

Referring to FIG. 1, a fluid control assembly 100 may be used in a heat management system, and the heat management system may be a vehicle heat management system, specifically as a heat management system of a new energy vehicle. The fluid control assembly 100 includes a fluid management element and a passage element 4. The fluid management element includes at least one of a valve element 1, a heat exchange element 2, and a liquid reservoir element 3. In this embodiment, the fluid management element includes the valve element 1, the heat exchange element 2, and the liquid reservoir element 3. The number of the valve elements 1 is multiple. The valve elements 1 are connected with the passage element 4. The passage element 4 has multiple passages. The valve elements 1 can implement a communication and non-communication of two or more of the passages, and can implement a direct communication and/or a throttling communication among the passages when being in communication with each other. The heat exchange element 2 is connected with the passage element 4. In this embodiment, the heat exchange element 2 includes multiple stacked plates, and the heat exchange element 2 has a first flow passage and a second flow passage which are not in communication with each other. A working fluid (such as a refrigerant) in the first flow passage can exchange heat with a working fluid (such as a coolant) in the second flow passage inside the heat exchange element 2, and the first flow passage of the heat exchange element 2 is in communication with two of the passages. The liquid reservoir element 3 is connected with the passage element 4, and the liquid reservoir element 3 has at least a portion of liquid storage cavity since the liquid storage cavity may be formed by the liquid reservoir element 3 together with other portions. The liquid storage cavity is in communication with two or more of the passages, and is mainly used for gas-liquid two-phase separation of the working fluid so as to prevent the gas-phase fluid in the working fluid (such as the refrigerant) from flowing to the subsequent passage circuit. The connection is defined to include fixed connection, position-limited connection, detachable connection or sealed connection, and so on. The direct communication is defined as not changing or tending not to change the pressure (such as a pressure loss range is less than 1%) before and after the working fluid flows through the valve element, and the throttling communication is defined as the pressure before the working fluid flows through the valve element 1 is greater than the pressure after the working fluid flows through the valve element 1.

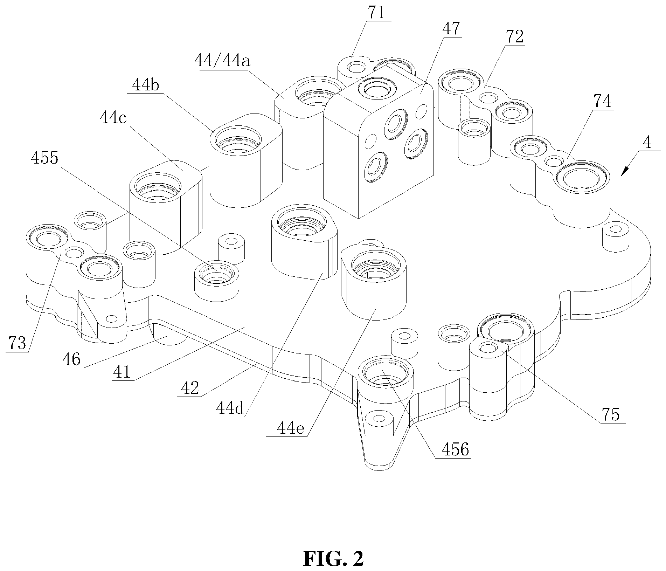

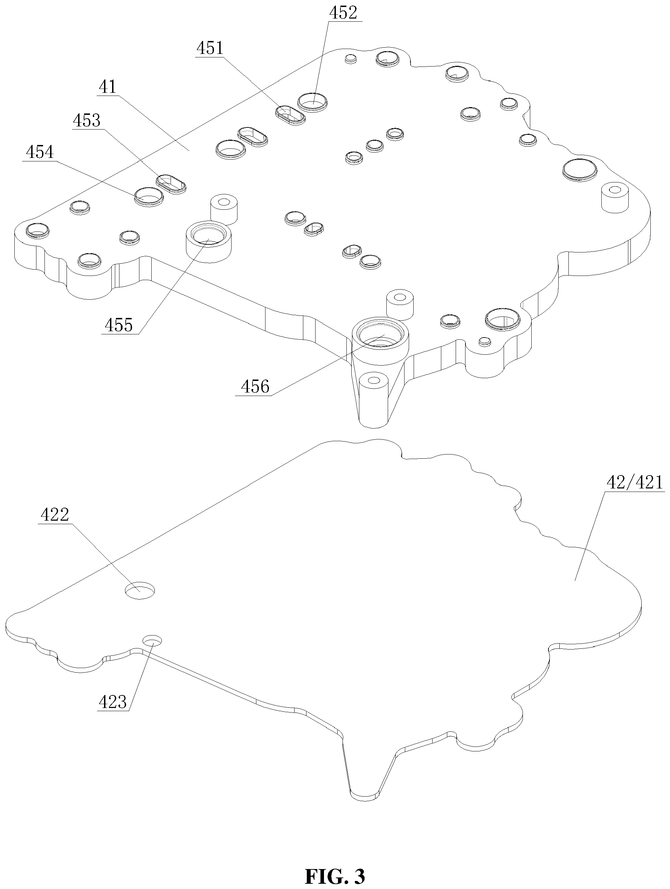

Referring to FIG. 2 to FIG. 4, in order to implement a lightweight of the fluid control assembly, the passage element 4 includes a flow passage plate 41 and a first covering plate 42. In this embodiment, the flow passage plate 41 has a slot cavity forming a passage and a hole. The numbers of slot cavities and holes are multiple. The holes are configured to form communication ducts between different single communication passages. The holes extend through the flow passage plate 41, and the slot cavities forming passages do not extend through the flow passage plate 41. The slot cavities forming the passages and holes are integrally formed by cold extrusion. The flow passage plate 41 is in abutment with the first covering plate 42, and the flow passage plate 41 is connected with the first covering plate 42. In this embodiment, the flow passage plate 42 and the first covering plate 42 are sealingly fixed by welding. The flow passage plate 41 is matched with the first covering plate 42 to form the passages of the passage element 4, which is beneficial to the lightweight of the element with passages compared with the passages formed by machining of a whole valve block. Specifically, the flow passage plate 41 includes a first wall 411. Along a direction perpendicular to the first wall 411, and slot cavities and holes which are recessed from the first wall 411 inward away from the first wall 411 are formed on the flow passage plate 41. Correspondingly, the first covering plate 42 includes a second wall 421, which is a flat surface in this embodiment. When the flow passage plate 41 is matched with the first covering plate 42, the first wall 411 is in abutment with the second wall 421, and the first wall 411 and the second wall 421 are sealingly fixed by welding, so as to form the passages of the passage element 4. Alternatively, the holes may be formed on the first covering plate 42, that is, along a direction perpendicular to the second wall 421, the holes extend through the first covering plate 42. In that case, the flow passage plate 41 only has slot cavities forming the passages. The first wall 411 is in abutment with and is sealingly fixed to the second wall 421 by welding, and the flow passage plate 41 is matched with the first covering plate 42 to form the passages of the passage element 4.

Alternatively, in another embodiment, each of the flow passage plate 41 and the first covering plate 42 has slot cavities forming the passages. Specifically, along a direction perpendicular to the first wall 411 of the flow passage plate 41, the slot cavities located in the flow passage plate 41 forming the passages are recessed from the first wall 411 inward away from the first wall 411. Along a direction perpendicular to the second wall 421, the slot cavities located in the first covering plate 42 are recessed from the second wall 421 inward away from the second wall 421. The first wall 411 is in abutment with the second wall 421, the first wall 411 and the second wall 421 are sealingly fixed by welding, and the flow passage plate 41 is matched with the first covering plate 42 to form the passages of the passage element 4. In this embodiment, the holes can be formed in the flow passage plate 41 or the first covering plate 42. That is, in the direction perpendicular to the first wall 411, the holes extend through the flow passage plate 41, or in the direction perpendicular to the second wall 421, the holes extend through the first covering plate 42.

It should be pointed out that all the above embodiments form single-layer or single-sided passages. However, according to the complexity of the application of the fluid control assembly 100 to the heat management system or the complexity of the layout of the passages, the passage element 4 may be configure to have double-layer or double-sided passages. In that case, the passage element further includes a second covering plate, and the first covering plate 42 and the second covering plate are collectively referred to as covering plate. In the direction perpendicular to the first wall 411, a part of the slot cavities forming the passages (the part is defined to refer to portions in term of the quantity of the slot cavities) are recessed from the first wall 411 inward away from the first wall 411. Another part of the slot cavities forming the passages are recessed from a third wall of the flow passage plate 41 inward away from the third wall. The third wall and the first wall are two opposite walls of the flow passage plate. The flow passage plate 41 is located between the first covering plate 42 and the second covering plate. The first covering plate 42 is in abutment with and is sealingly fixed to the first wall by welding, and the second covering plate is in abutment with and is sealingly fixed to the third wall by welding, so that the first covering plate 42, the second covering plate and the flow passage plate 41 are matched with one another to form the passages of the passage element 4.

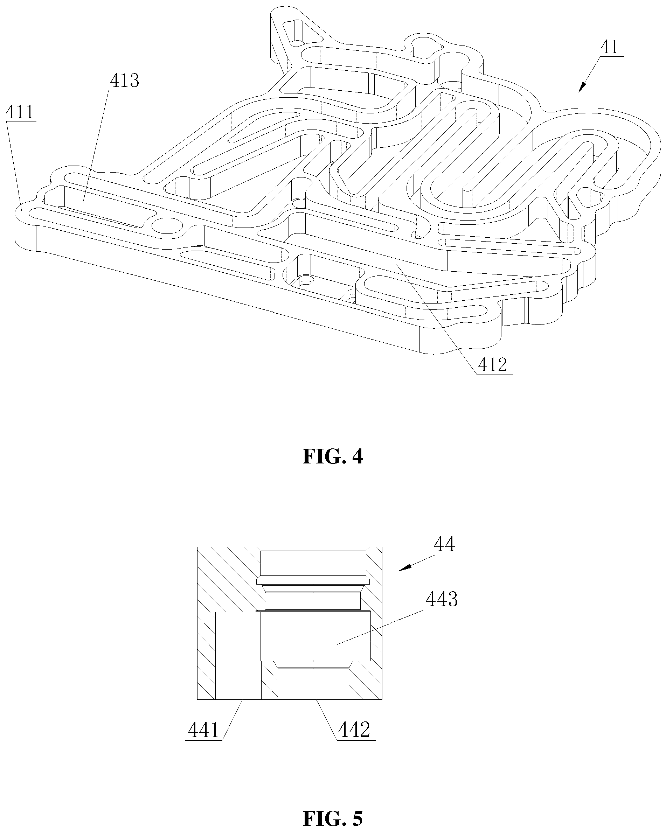

Referring to FIG. 2 and FIG. 5, the passage element 4 further includes a valve mounting seat 44, which is configured to mount the valve element 1. The number of the valve mounting seat 44 is the same with the number of the valve element 1, and the valve mounting seat 44 is connected with the flow passage plate 41, the first covering plate 42 or the second covering plate. In this embodiment, the valve mounting seat 44 is in abutment with and is sealingly fixed to the flow passage plate 41 by welding. Alternatively, in another embodiment, the valve mounting seat 44 may be integrally formed with the flow passage plate 41. The valve mounting seat 44 includes a first port 441, a second port 442, and a mounting cavity 443. The first port 441 serves as an inlet, and the second port 442 serves as an outlet. As for a single valve mounting seat 44, the first port 441 is in communication with the second port 442 through the mounting cavity 443, the mounting cavity 443 is configured to mount the valve element, and the first port 441 and the second port 442 are configured to be in communication with the holes forming communication ducts, respectively, so that the valve element can implement the communication or non-communication between two or more of the passages.

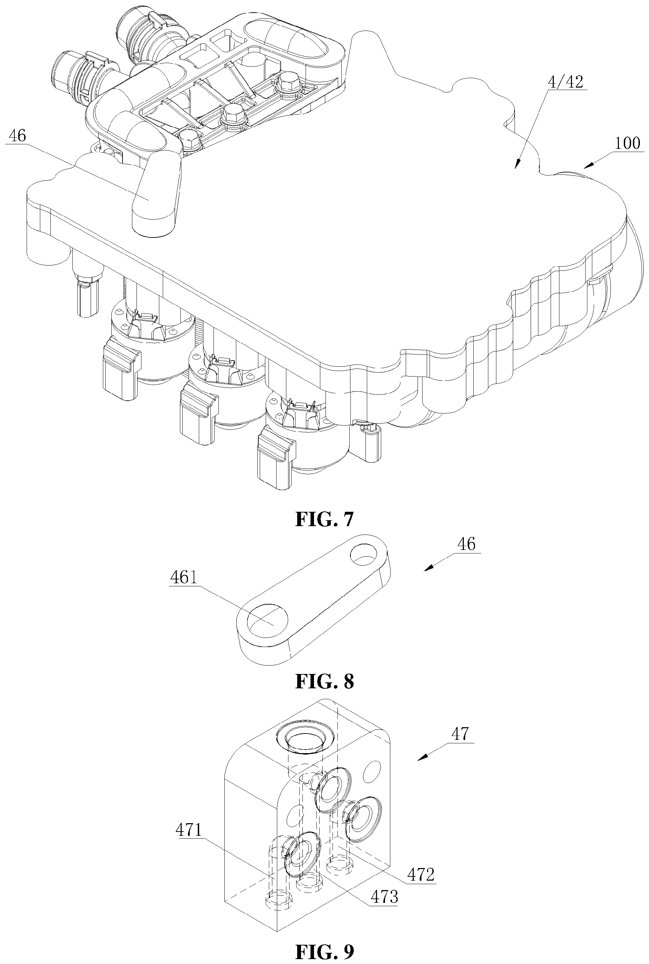

Referring to FIG. 1 to FIG. 6, in this embodiment, the passages includes a sixth passage 401, a seventh passage 402, a third passage 403, a fourth passage 404, a fifth passage 405, a first passage 406, an eighth passage 407 and a second passage 408. The valve mounting seat 44 includes a first valve mounting seat 44a, a second valve mounting seat 44b, a third valve mounting seat 44c, a fourth valve mounting seat 44d, and a fifth valve mounting seat 44e. The valve element 1 includes a first valve element 11, a second valve element 12, a third valve element 13, a fourth valve element 14 and a fifth valve element 15. A portion of the first valve element 11 is located inside a mounting cavity of the first valve mounting seat 44a, and the first valve element 11 is connected with the first valve mounting seat 44a. For example, in this embodiment, the first valve element 11 is fixed to the first valve mounting seat 44a by insertion, the first valve element 11 can communicate or block the sixth passage 401 with the seventh passage 402 through the first valve mounting seat 44a, and can directly communicate the sixth passage 401 with the seventh passage 402 when being in communication with each other. Specifically, the holes include a first hole 451 and a second hole 452, the first hole 451 is in communication with the sixth passage 401, and the second hole 452 is in communication with the seventh passage 402. When the first valve mounting seat 44a is connected with the flow passage plate 41, the first port of the first valve mounting seat 44a is in communication with the first hole 451, that is, the first port is in communication with the sixth passage 401. The second port of the first valve mounting seat 44a is in communication with the second hole 452, that is, the second port is in communication with the seventh passage 402. Therefore, under the control of the first valve element 11, the sixth passage 401 can be or not be in communication with the seventh passage 402 through the first hole 451, the second hole 452 and the first valve mounting seat 44a. Similarly, a portion of the second valve element 12 is located inside a mounting cavity of the second valve mounting seat 44b, and the second valve element 12 is connected with the second valve mounting seat 44b. The second valve element 12 can communicate or block the sixth passage 401 with the third passage 403 through the hole and the second valve mounting seat 44b, and can directly communicate the sixth passage 401 with the third passage 403 when being in communication with each other. A portion of the fourth valve element 14 is located inside a mounting cavity of the fourth valve mounting seat 44d, and the fourth valve element 14 is connected with the fourth valve mounting seat 44d. The fourth valve element 14 can communicate or block the fourth passage 404 with the first passage 406 through the hole and the fourth valve mounting seat 44d, and can throttlingly communicate the fourth passage 404 with the first passage 406 when being in communication with each other. A portion of the fifth valve element 15 is located inside a mounting cavity of the fifth valve mounting seat 44e, and the fifth valve element 15 is connected with the fifth valve mounting seat 44e. The fifth valve element 15 can communicate or block the first passage 406 with the eighth passage 407 through the fifth valve mounting seat 44e, and can throttlingly communicate the first passage 406 with the eighth passage 407 when being in communication with each other. It should be pointed out herein that, in the layout of the passages, a traction flow passage may be provided to avoid cross flow of cross passages. Specifically, in this embodiment, referring to FIG. 7 and FIG. 8, the passage element 4 further includes a traction block 46, which is sealingly fixed to the first covering plate 42 by welding. The traction block 46 includes a traction flow passage 461, and the holes further include a third hole 453 and a fourth hole 454. The third hole 453 is in communication with the third passage 403. Correspondingly, the first covering plate 42 is further provided with through holes, which extend through the first covering plate 42 in the direction perpendicular to the second wall 421. The through holes specifically include a first through hole 422 and a second through hole 423. The first through hole 422 is in communication with the fourth hole 454, the second through hole 423 is in communication with the second passage 408, and the first through hole 422 is in communication with the second through hole 423 through the traction flow passage 461, so that the second passage 408 is in communication with the fourth hole 454 through the traction flow passage 461. Furthermore, a first port of the third valve mounting seat 44c is in communication with the third hole 453, and a second port of the third valve mounting seat 44c is in communication with the fourth hole 454. A portion of the third valve element 13 is located inside a mounting cavity of the third valve mounting seat 44c, and the third valve element 13 is connected with the third valve mounting seat 44c. Therefore, the third valve element 13 can communicate or block the third passage 403 with the second passage 408 through the traction flow passage 461, and directly communicate the third passage 403 with the second passage 408 when being in communication with each other.

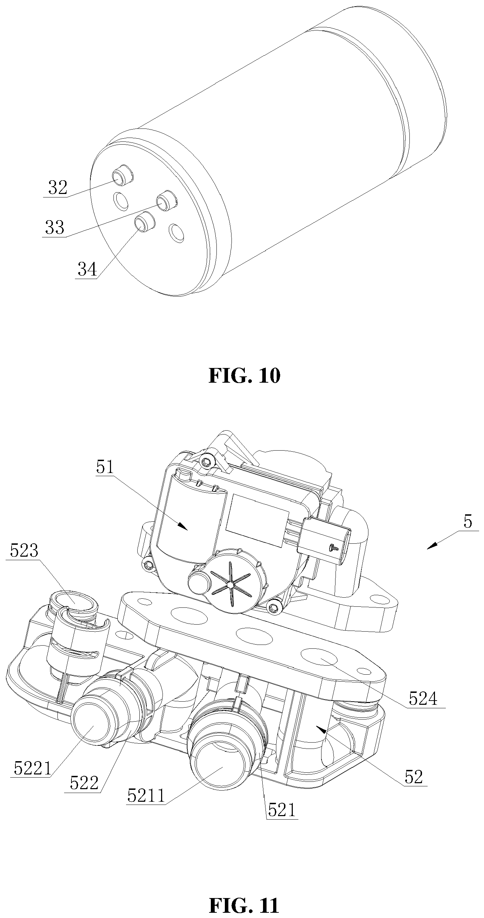

Referring to FIG. 1, in this embodiment, the liquid reservoir element 3 includes a bracket 31, and the liquid reservoir element 3 is connected with the passage element 4 by the bracket 31. Specifically, the bracket 31 is located at an outer periphery of a tank body of the liquid reservoir element 3, the bracket 31 is fixedly connected with the flow passage plate 41 by screws, and the bracket 31 is fastened to the outer periphery of the tank body, so as to implement the connection between the liquid reservoir element 3 and the passage element 4. Referring to FIG. 2, FIG. 3, FIG. 6 and FIG. 9, in this embodiment, the passage element 4 further includes a liquid reservoir element mounting seat 47, which is sealingly fixed to the flow passage plate 41 by welding. The liquid reservoir element mounting seat 47 has a first connecting flow passage 471, a second connecting flow passage 472 and a third connecting flow passage 473. The first connecting flow passage 471 is in communication with the fourth passage 404 through a hole, the second connecting flow passage 472 is in communication with the fifth passage 405 through a hole, and the third connecting flow passage 473 is in communication with the first passage 406 through a hole. Correspondingly, referring to FIG. 10, a main body of the liquid reservoir element 3 includes a first inlet pipe, a second inlet pipe and an outlet pipe. The first inlet pipe has a first inlet flow passage 32, the second inlet pipe has a second inlet flow passage 33, and the outlet pipe has an outlet flow passage 34. When the main body of the liquid reservoir element 3 is matched with the liquid reservoir element mounting seat 47, at least a part of the first inlet pipe is located inside the first connecting flow passage 471, and the first connecting flow passage 471 is in communication with the liquid storage cavity through the first inlet flow passage 32. At least a part of the second inlet pipe is located inside the second connecting flow passage 472, and the second connecting flow passage 472 is in communication with the liquid storage cavity through the second inlet flow passage 33. At least a part of the outlet pipe is located inside the third connecting flow passage 473, and the third connecting flow passage 473 is in communication with the liquid storage cavity through the outlet flow passage 34. In addition, in this embodiment, the liquid reservoir element 3 and the liquid reservoir element mounting seat 47 are fixedly connected by screws, so as to strengthen the fixation of the liquid reservoir element 3. In this way, the fourth passage 404 is in communication with the liquid storage cavity through the first connecting flow passage 471 and the first inlet flow passage 33, the fifth passage 405 is in communication with the liquid storage cavity through the second connecting flow passage 472 and the second inlet flow passage 33, and the liquid storage cavity is in communication with the first passage 406 through the outlet flow passage 34 and the third connecting flow passage 473. Further, in this embodiment, a one-way valve is arranged in the liquid reservoir element 3, and the one-way valve has functions of unidirectional communication and reverse cutoff. The one-way valve includes a first one-way valve and a second one-way valve, and the first one-way valve communicates the first inlet flow passage 32 to the liquid storage cavity unidirectionally, thereby implementing the unidirectional communication of the fourth passage 404 to the liquid storage cavity by the first one-way valve. The second one-way valve communicates the second inlet flow passage 33 to the liquid storage cavity unidirectionally, thereby implementing the unidirectional communication of the fifth passage 405 to the liquid storage cavity by the second one-way valve. The arrangement of the first one-way valve and the second one-way valve is beneficial to preventing the working fluid from entering the liquid storage cavity from one inlet flow passage (such as the first inlet flow passage 32) and then flowing back to another inlet flow passage (such as the second inlet flow passage 33) in a case that the liquid reservoir element 3 has two or more inlets. In addition, the one-way valves are integrated on the liquid reservoir element 3, which is beneficial to obtain a compact structure.

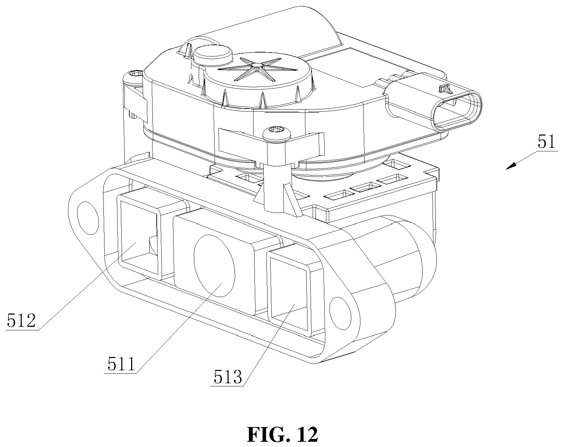

Referring to FIG. 1, FIG. 3, and FIG. 6, in this embodiment, the heat exchange element 2 is fixedly connected with the passage element 4 by screws. Specifically, the heat exchange element 2 includes a bottom plate 21, the bottom plate 21 is provided with a through hole, which connected with the passage element 4 by screws. The heat exchange element 2 is fixedly connected with the passage element 4 by screws through the bottom plate 21. The eighth passage 407 is in communication with the second passage 408 through the first flow passage of the heat exchange element 2. Specifically, the holes further include a fifth hole 455 and a sixth hole 456. The fifth hole 455 is in communication with the eighth passage 407, the sixth hole 456 is in communication with the second passage 408, and the fifth hole 455 is in communication with the sixth hole 456 through the first flow passage of the heat exchange element 2. Referring to FIG. 1, FIG. 11 and FIG. 12, the fluid control assembly 100 further includes a multi-way valve element 5. The multi-way valve element 5 includes a multi-way valve 51 and a connector 52. In this embodiment, the multi-way valve 51 is a three-way valve, which has an inlet 511, a first outlet 512 and a second outlet 513. By rotating a valve core of the multi-way valve 51, the inlet 511 can be in communication with the first outlet 512 or the inlet 511 can be in communication with the second outlet 513. In this embodiment, orientations of the inlet 511, the first outlet 512 and the second outlet 513 are the same, and the inlet 511 is located between the first outlet 512 and the second outlet 513, which facilitates the assembly of the multi-way valve 51 and the connector 52. Correspondingly, the connector 52 includes an inlet joint 521 and an outlet joint 522, which are configured to connect with other components in the heat management system, such as a battery cooling module, so as to cool down a battery assembly. The inlet joint 521 has an inlet joint flow passage 5211, and the outlet joint 522 has an outlet joint flow passage 5221. The connector 52 further has a third flow passage 523 and a fourth flow passage 524 which are configured to be in communication with the second flow passage of the heat exchange element 2. The third flow passage 523 is in communication with the outlet joint flow passage 5221. The multi-way valve 51 is connected with the connector 52. Specifically, in this embodiment, the multi-way valve 51 is fixedly connected with the connector 52 by screws. After the multi-way valve 51 is assembled and connected with the connector 52, the inlet joint flow passage 5211 is in communication with the inlet 511, the outlet joint flow passage 5221 is in communication with the first outlet 512, and the fourth flow passage 524 is in communication with the second outlet 513. Therefore, by switching function of the valve core of the multi-way valve 51, the inlet joint flow passage 5211 can be in communication with the outlet joint flow passage 5221 or the inlet joint flow passage 5211 can be in communication with the fourth flow passage 524. The multi-way valve 5 is connected with the heat exchange element 2. In this embodiment, the connector 52 of the multi-way valve element 5 is fixedly connected with the bottom plate 21 of the heat exchange element 2 by screws, and the third flow passage 523 is in communication with the fourth flow passage 524 through the second flow passage of the heat exchange element 2.

Referring to FIG. 1, FIG. 6, FIG. 9 and FIG. 11, in order to ensure the safe and stable operation of the heat management system when the fluid control assembly 100 is used in the heat management system, it is necessary to improve the control accuracy of the fluid control assembly 100, especially the control accuracy of the valve element. Therefore, in this embodiment, the fluid control assembly 100 further includes a sensor. The number of the sensor may be multiple, and a sensing head of each sensor is located inside a passage or inside a mounting hole in communication with the passage, and the sensor is mainly configured to detect a temperature and/or a pressure of the working fluid in the passage. For example, in this embodiment, the sensors include a first sensor 61, a second sensor 62, a third sensor 63, a fourth sensor 64, a fifth sensor 65 and a sixth sensor 66. The first to fourth sensors 61 to 65 are connected with sensor mounting seats provided on the flow passage plate 41, the fifth sensor 65 is connected with the liquid reservoir element mounting seat 47, and the sixth sensor 66 is connected with the connector 52. Specifically, the first sensor 61 is configured to detect a temperature and/or a pressure of the working fluid in the third flow passage 403, the second sensor 62 is configured to detect a temperature and/or a pressure of the working fluid in the fourth passage 404, the third sensor 63 is configured to detect a temperature and/or a pressure of the working fluid in the fifth passage 405, the fourth sensor 64 is configured to detect a temperature and/or a pressure of the working fluid in the second passage 408, and the fifth sensor 65 is configured to detect a temperature and/or a pressure of the working fluid in the third connecting flow passage 473 of the liquid reservoir element mounting seat 47, or in other words, the fifth sensor 65 is configured to detect a temperature and/or a pressure of the working fluid at the outlet of the liquid reservoir element 3. The sixth sensor 66 is configured to detect a temperature and/or a pressure of the working fluid in the third flow passage 523 of the connecting member.

Referring to FIG. 1, FIG. 2 and FIG. 6, the passage element 4 further includes connection port seats, each of which has a connection port. The fluid control assembly 100 implements the connection and communication between the passage and other elements in the heat management system through the connection ports of the connection port seats. The connection port seats are connected with the flow passage plate 41 or the connection port seats are integrally formed with the flow passage plate 41. In this embodiment, the connection port seats are in abutment with and sealingly fixed to the flow passage plate 41 by welding. Orientations of the connection ports are the same, which facilitates the connection between the fluid control assembly 100 and other elements. Specifically, the connection port seats include a first connection port seat 71, a second connection port seat 72, a third connection port seat 73, a fourth connection port seat 74 and a fifth connection port seat 75. The first connection port seat 71 has a first connection port 711 that is in communication with the sixth passage 401. The second connection port seat 72 has a second connection port 721 and a third connection port 722, the second connection port 721 is in communication with the seventh passage 402 and the third connection port 722 is in communication with the fifth passage 405, so that under the control of the valve element, the first valve element 11 can communicate or block the first connection port 711 with the second connection port 721. The third connection port seat 73 has a fourth connection port 731 and a fifth connection port 732, the fourth connection port 731 is in communication with the third passage 403, and the fifth connection port 732 is in communication with the fourth passage 404, so that the second valve element 12 can communicate the first connection port 711 with the fourth connection port 731. The fourth connection port seat 74 has a sixth connection port 741 and a seventh connection port 742, the sixth connection port 741 is in communication with the first passage 406, and the seventh connection port 742 is in communication with the second passage 408, so that the fourth valve element 14 can communicate or block the fifth connection port 732 with the sixth connection port 741. The fifth connection port seat 75 has an eighth connection port 751 which is in communication with the second passage 408, so that the third valve element 13 can communicate or block the fourth connection port 731 with the eighth connection port 751, and the eighth connection port 751 is in communication with the seventh connection port 742.

The fluid control assembly 100 can be used in the heat management system. Referring to FIG. 1, FIG. 6 and FIG. 13, an embodiment of the fluid control assembly 100 used in the heat management system is provided. In this embodiment, the heat management system 200 further includes a compressor 201, a first heat exchanger 202, a second heat exchanger 203, an evaporator 204, an expansion element 205 and a third one-way valve 206. The first heat exchanger 202 may serve as a condenser or an evaporator, and the second heat exchanger 203 may serve as a condenser. An outlet of the compressor 201 is butt-joint with and in communication with the first connection port 711, and an inlet of the compressor 201 is butt-joint with and in communication with the eighth connection port 751. A port at one end of the first heat exchanger 202 is butt-joint with and in communication with the fourth connection port 731, and a port at the other end of the first heat exchanger 202 is butt-joint with and in communication with the fifth connection port 732. An inlet of the second heat exchanger 203 is butt-joint with and in communication with the second connection port 721, and an outlet of the second heat exchanger 203 is butt-joint with and in communication with the third connection port 722. An inlet of the evaporator 204 is butt-joint with and in communication with the sixth connection port 741 through the expansion element 205, and an outlet of the evaporator 204 is in unidirectionally communication with the seventh connection port 742 by the third one-way valve 206. Alternatively, in another embodiment, the third one-way valve 206 may not be provided, that is, the outlet of the evaporator 204 is butt-joint with and in communication with the seventh connection port 742.

Referring to FIG. 1, FIG. 6, FIG. 13 and FIG. 14, the fluid control assembly 100 used in the heat management system includes but is not limited to two operation mode.

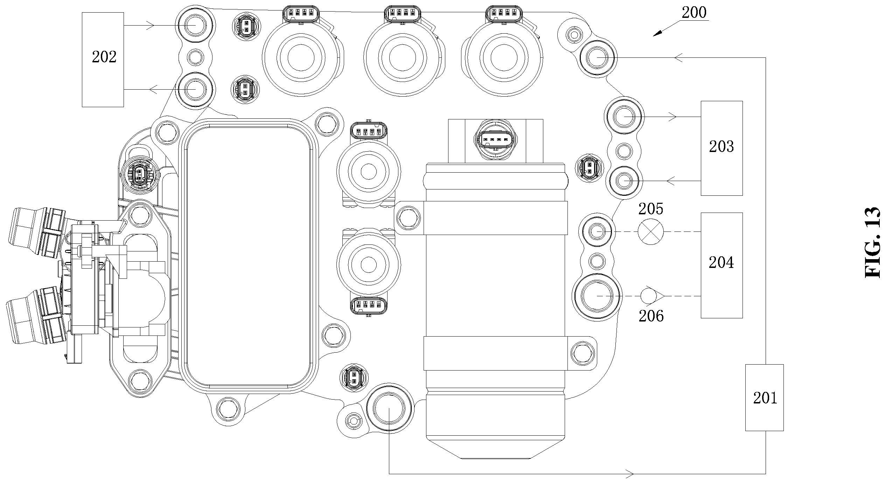

In a first operation mode (FIG. 13): the first valve element 11, the third valve element 13, the fourth valve element 14 and the fifth valve element 15 are opened, the second valve element 12 is closed, and the multi-way valve 51 is switched so that the inlet joint flow passage 5211 is in communication with the fourth flow passage 524.

The high-temperature and high-pressure gas-phase working fluid (such as the refrigerant) at the outlet of the compressor 201 flows into the sixth passage 401 from the first connection port 711, directly flows into the seventh passage 402 through the first valve element 11, and flows into the second heat exchanger 203 from the second connection port 721. After condensation and heat dissipation by the second heat exchanger 203 (the condenser), the working fluid becomes a relatively high-temperature gas-liquid two-phase working fluid, flows into the fifth passage 405 through the third connection port 722, and enters the liquid storage cavity of the liquid reservoir element 3 with the unidirectional communication of the second one-way valve. After the gas-phase working fluid is separated by the liquid reservoir element 3, the relatively high-temperature liquid-phase working fluid flows to the first passage 406. A part of the relatively high-temperature liquid-phase working fluid in the first passage 406, after throttling expansion by the fourth valve element 14, becomes a low-temperature and low-pressure gas-liquid two-phase working fluid, then flows through the fourth passage 404, and then flows into the first heat exchanger 202 (serving as the evaporator at this time) through the fifth connection port 732. The working fluid becomes a relatively low-temperature gas-phase working fluid after evaporation and heat absorption by the first heat exchanger 202, flows into the third passage 403 through the fourth connection port 731, and directly flows into the second passage 408 through the third valve element 13. The other part of the relatively high-temperature liquid-phase working fluid in the first passage 406, after throttling expansion by the fifth valve element 15, becomes a low-temperature and low-pressure gas-liquid two-phase working fluid, then flows through the eighth passage 407 and into the first flow passage of the heat exchange element 2, and becomes a relatively low-temperature gas-phase working fluid after exchanging heat with and being heat-absorbed by the working fluid (such as the coolant) in the second flow passage of the heat exchange element 2, and then flows to the second passage 408. The gas-phase working fluid in the second passage 408 converges and flows back to the compressor 201 through the eighth connection port 751 for recycling. It should be noted that, in the first operation mode, the expansion element 205 is closed and the third one-way valve 206 is in a reverse cutoff state.

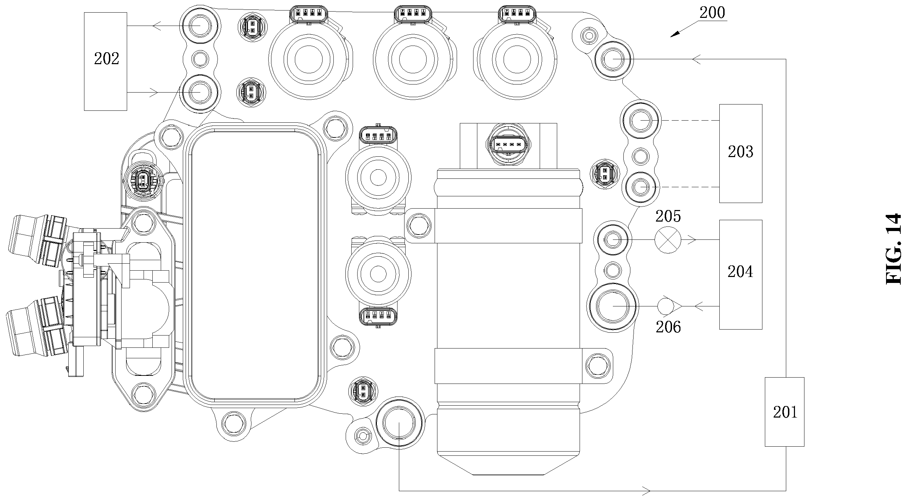

In a second operation mode (FIG. 14): the second valve element 12 and the fifth valve element 15 are opened, the first valve element 11, the third valve element 13 and the fourth valve element 14 are closed, and the multi-way valve 51 is switched so that the inlet joint flow passage 5211 is in communication with the fourth flow passage 524.

The high-temperature and high-pressure gas-phase working fluid (such as the refrigerant) at the outlet of the compressor 201 enters the sixth passage 401 from the first connection port 711, directly flows into the third passage 403 through the second valve element 12, and flows into the first heat exchanger 202 (serving as the condenser at this time) from the fourth connection port 731. After condensation and heat dissipation by the first heat exchanger, the working fluid becomes a relatively high-temperature gas-liquid two-phase working fluid, flows into the fourth passage 404 through the fifth connection port 732, and enters the liquid storage cavity of the liquid reservoir element 3 with the unidirectional communication of the first one-way valve. After the gas-phase working fluid is separated by the liquid reservoir element 3, the relatively high-temperature liquid-phase working fluid flows to the first passage 406. A part of the relatively high-temperature liquid-phase working fluid in the first passage 406, after throttling expansion by the fifth valve element 15, becomes a low-temperature and low-pressure gas-liquid two-phase working fluid, then flows through the eighth passage 407 and flows into the first flow passage of the heat exchange element 2, and becomes a relatively low-temperature gas-phase working fluid after exchanging heat with and being heat absorbed by the working fluid (such as the coolant) in the second flow passage of the heat exchange element 2, and flows to the second passage 408. The other part of the relatively high-temperature liquid-phase working fluid in the first passage 406, after throttling expansion by the expansion element 205, becomes a low-temperature and low-pressure gas-liquid two-phase working fluid, and flows to the evaporator 204. After evaporation and heat absorption by the evaporator 204, the working fluid becomes a relatively low-temperature gas-phase working fluid which flows to the second passage 408 through the third one-way valve 206. The gas-phase working fluid in the second passage 408 converges and flows back to the compressor 201 through the eighth connection port 751 for recycling.

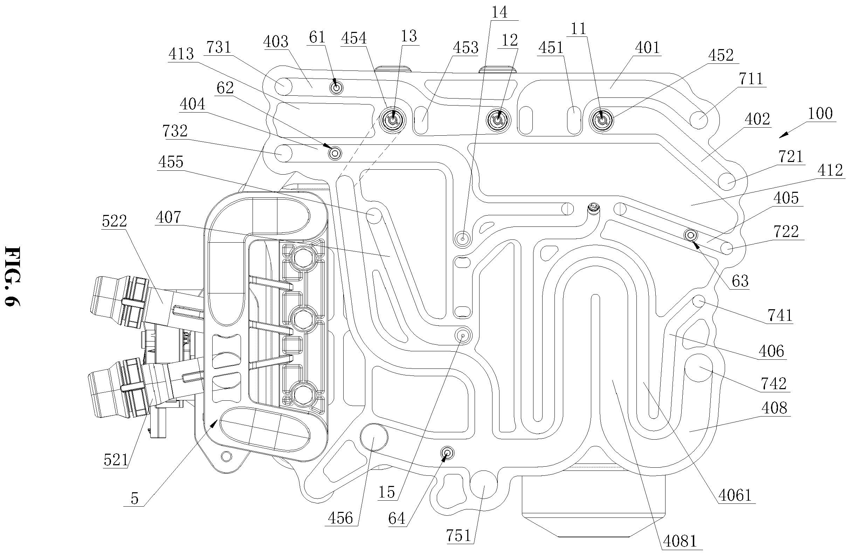

Referring to FIG. 4 and FIG. 6, with the operation modes of the above heat management system 200, it can be known that the working fluid in the sixth passage 401, the seventh passage 402 and the third passage 403 are mainly high-temperature and high-pressure gas-phase working fluid flowing in from the compressor 201, and the working fluid in the fourth passage 404 and the fifth passage 405 are mainly working fluid after being subject to condensation and heat dissipation by the first heat exchanger 202 (serving as the condenser) or the second heat exchanger 203 (serving as the condenser). In this embodiment, in order to avoid harmful heat exchange between the high-temperature working fluid in the sixth passage 401, the seventh passage 402 and the third passage 403 and the working fluid in the fourth passage 404 and the fifth passage 405 after being subject to condensation and heat dissipation, the passage element 4 further includes a first heat insulation groove 412 and a second heat insulation groove 413. In this embodiment, in the direction perpendicular to the first wall 411 of the flow passage plate 41, the first heat insulation groove 412 is recessed from the first wall 411 inward away from the first wall 411, and at least a part of the seventh passage 402 and at least a part of the fifth passage 405 are distributed along a periphery of the first heat insulation groove 412. Similarly, in the direction perpendicular to the first wall 44, the second heat insulation groove 413 is recessed from the first wall 411 inward away from the first wall 411, and at least a part of the third passage 403 and at least a part of the fourth passage 404 are distributed along a periphery of the second heat insulation groove 413. The heat insulation grooves can be formed on the flow passage plate 41 by cold extrusion along with the process of forming the slot cavities and holes of the passages. Alternatively, in another embodiment, the first heat insulation groove 412 and the second heat insulation groove 413 may be configured to extend through the passage element 4, which is beneficial to weight reduction while avoiding harmful heat transfer between the passages. It should be pointed out that in order to avoid harmful heat exchange between the passages, the passage element 4 may have other heat insulation grooves in addition to the first heat insulation groove 412 and the second heat insulation groove 413.

Referring to FIG. 6, with the second operation mode of the above heat management system 200, the liquid-phase working fluid flowing from the liquid reservoir element 3 to the first passage 406 becomes a gas-phase working fluid after throttling expansion by the expansion element 205 and evaporation and heat absorption by the evaporator 204, flows t the second passage 408 and flows back to the compressor 201. In order to ensure that the working fluid in the second passage 408 and flowing back to the compressor 201 is gas-phase, the liquid-phase working fluid in the first passage 406 needs to be supercooled after condensation and heat exchanging by the first heat exchanger 202 (serving as the condenser) and gas-phase separation by the liquid reservoir element 3, and the gas-phase working fluid in the second passage 408 needs to be overheated after throttling expansion by the expansion element 205 and evaporation and heat absorption by the evaporator 204. Considering the energy saving and heat exchange efficiency of the heat management system, in this embodiment, at least a part of the first passage 406 is arranged close to at least a part of the second passage 408. Herein, the wording "close to" is defined in that the distance between these two parts is configured to be as small as possible on condition of ensuring strength, so that the working fluid (with relatively high-temperature) in the part, close to the second passage 408, of the first passage 406 can exchange heat with the working fluid (with relatively low-temperature) in the portion of the second passage 408, so as to further condense and dissipate heat of the working fluid in the first passage 406 and ensure that the working fluid is supercooled and at the same time further evaporate and absorb heat of the working fluid in the second passage 408 and ensure that the working fluid is overheated. Specifically, in this embodiment, the first passage 406 includes a first passage section 4061, and correspondingly, the second passage 408 includes the second passage section 4081. The first passage section 4061 is arranged close to the second passage section 4081. Furthermore, the first passage section 4061 is U-shaped, and the second passage section 4081 is also U-shaped. The first passage section 4061 is formed around the second passage section 4081 and is located on an outer side of the second passage section 4081. The first passage section 4061 and the second passage section 4081 are arranged to be U-shaped, which is beneficial to increasing a heat exchange area between the first passage section 4061 and the second passage section 4081 on one hand, and is beneficial for the compact structure of the passages on the other hand. Alternatively, in another embodiment, the first passage section 4061 and the second passage section 4081 may be in other shapes. Alternatively, in another embodiment, the working fluid in the passage after condensation and heat dissipation by the first heat exchanger (serving as the condenser) or the second heat exchanger (serving as the condenser) may directly flow through the expansion element for throttling expansion and the evaporator for evaporation and heat absorption without being gas-liquid separation by the liquid reservoir element 3, and then flows back to the compressor through the passage. Therefore, considering of being available in other embodiments, at least a part of the passage (such as the first passage) located after the condenser and before the expansion element is arranged close to at least a part of the passage (such as the second passage) located after the evaporator. Herein, the wordings "before" and "after" refer to: starting from the outlet of the compressor and ending at the inlet of the compressor, along a flow direction of the refrigerant, the position close to the outlet of the compressor is defined as "before" and the position away from the outlet of the compressor is defined as "after". It should be pointed out that in case that the first heat exchanger serves as the condenser and the second heat exchanger serves as the condenser, the first heat exchanger and the second heat exchanger can be collectively referred to as condensers. The expansion element can be a thermal expansion valve, an electronic expansion valve, a capillary tube and other elements with throttling expansion effect known to those skilled in the art. Compared with providing an intermediate heat exchanger in the system to implement the supercooling and overheating of the working fluid, using the heat exchange between the passages to improve the supercooling and overheating of the working fluid, which is beneficial to making full use of the heat energy between the passages, reducing the energy consumption of the system and improving the heat exchange efficiency.

In addition, according to the different uses of the passages of the fluid control assembly, the passage can includes communication passages and heat exchange passages. The communication passages are mainly configured to implement the communication of the working fluid, and the heat exchange passages can implement the heat exchange of the working fluid between the passages while performing the communication of the working fluid. For example, in this embodiment, according to the operation modes, the third passage to the eighth passage are configured as communication passages, and the first passage and the second passage are configured as heat exchange passages. It can be understood that, in an extended embodiment, at least one of the condenser, the evaporator and the expansion element can be further integrated on the fluid control assembly. In a specific embodiment, the fluid control assembly includes a fluid management element and a passage element. The fluid management element includes at least one of a condenser and a liquid reservoir element, and the fluid management element is connected with the passage element. The connection described herein includes direct connection and indirect connection, and the indirect connection can be that the fluid management element is connected with the passage element through a pipeline. The heat exchange passages include a first passage and a second passage. The flow passage of the fluid management element is in communication with the communication passages. The flow passage of the fluid management element is in communication with the first passage, and at least a part of the first passage is arranged close to at least a part of the second passage. The working fluid in these two parts, close to each other, of the first passage and the second passage can exchange heat. In practical use, the high-temperature and high-pressure working fluid enters the first passage from the communication passages through the fluid management element, and the working fluid of the heat management system enters the second passage after evaporation and heat absorption. The working fluid in the first passage and the second passage exchange heat at their parts of being close to each other, which improves the efficiency of the heat management system. In addition, since the fluid control assembly has the communication passages and the heat exchange passages, the connection to an intermediate heat exchanger is omitted, which is beneficial to the compact structure of the fluid control assembly and to the layout and miniaturization of the heat management system.

In another specific embodiment, the fluid control assembly further includes at least one of an evaporator and an expansion element. As an example that both the evaporator and the expansion element are included, the evaporator and the expansion element can be connected with the passage element respectively, or the evaporator and the expansion element can be connected with the passage element after the evaporator and the expansion element are integrated. The first passage is in communication with the second passage through but not limited to the flow passage of the expansion element and the flow passage of the second heat exchanger. The expression "but not limited to the flow passage of the expansion element and the flow passage of the second heat exchanger" means it can further include a connecting pipe or other functional member, such as a switch valve, which will not be described in detail herein. Furthermore, the communication passage includes a first connection port and the first passage includes a second connection port. The first connection port and the second connection port are located on a same side of the passage element, which facilitates the connection and integration of the passage element, the liquid reservoir element and the condenser, and is beneficial to the compact structure of the fluid control assembly. The first passage includes a third connection port and the second passage includes a fourth connection port. The third connection port and the fourth connection port are located on a same side of the passage element, which facilitates the connection and integration of the passage element, the expansion element and the evaporator, and is beneficial to the compact structure of the fluid control assembly. It should be pointed out that the connection ports described herein include an opening of the hole for being in communication with the liquid reservoir element as well as the connection ports for being in communication with the condenser, the evaporator and the expansion element as described above.

It should be noted that the above embodiments are merely used to illustrate the present application and not to limit the technical solutions described in the present application. Although the present application has been described herein in detail with reference to the above embodiments, those of ordinary skill in the art should understand that those skilled in the art may still modify or equivalently replace the present application, and all technical solutions and its improvements that do not apart from the spirit and scope of the present application should be covered by the scope of the claims of the present application.

## Claims

1. A fluid control assembly, comprising:
a fluid management element; and
a passage element, wherein
the fluid management element comprises at least one of a condenser and a liquid reservoir element,
the fluid management element is connected with the passage element,
the passage element includes passages, and the passages comprise a communication passage and a heat exchange passage, wherein the heat exchange passage comprise a first passage and a second passage, the communication passage is in communication with a flow passage of the fluid management element, the flow passage of the fluid management element is in communication with the first passage, at least a part of the first passage is arranged close to at least a part of the second passage, and working fluids in the at least of the part of the first passage and the at least of the part of the second passage that are close to each other are heat-exchangable with each other.

2. The fluid control assembly according to claim 2, wherein the fluid management element further comprises at least one of an evaporator and an expansion element, the first passage is in communication with the second passage through but not limited to at least one of a flow passage of the expansion element and a flow passage of the evaporator.

3. The fluid control assembly according to claim 3, wherein the communication passage comprises a first connection port, the first passage comprises a second connection port, and the first connection port and the second connection port are located on the same side of the passage element,
the first passage further comprises a third connection port, the second passage comprises a fourth connection port, and the third connection port and the fourth connection port are located on the same side of the passage element.

4. The fluid control assembly according to claim 1, 2 or 3, wherein the first passage comprises a first passage section, the second passage comprises a second passage section, the first passage section is arranged around the second passage section, and the first passage section is arranged close to the second passage section.

5. The fluid control assembly according to claim 4, wherein the first passage section is U-shaped, the second passage section is U-shaped, and the first passage section is arranged around the second passage section and formed on an outer side of the second passage section.

6. The fluid control assembly according to any one of claims 1 to 5, wherein the passage element comprises a flow passage plate and a covering plate, at least one of the flow passage plate and the covering plate has slot cavities forming the passages, and the flow passage plate is matched with the covering plate to form the passages.

7. The fluid control assembly according to claim 6, wherein the flow passage plate has the slot cavities forming the passages, the flow passage plate comprises a first wall,
the slot cavities are formed by being recessed from the first wall inward away from the first wall in a direction perpendicular to the first wall, and the flow passage plate is matched with the covering pate to form the passages.

8. The fluid control assembly according to any one of claims 1 to 5, wherein the passages further comprise a third passage, a fourth passage, a fifth passage, a sixth passage, a seventh passage and an eighth passage, and the fluid management element further comprises a first valve element, a second valve element, a third valve element, a fourth valve element and a fifth valve element,
the first valve element is configured to directly communicate the sixth passage with the seventh passage, the second valve element is configured to directly communicate the sixth passage with the third passage, the third valve element is configured to directly communicate the third passage with the second passage, the fourth valve element is configured to throttlingly communicate the first passage with the fourth passage, the fifth valve element is configured to throttlingly communicate the first passage with the eighth passage, and the condenser is configured to communicate the seventh passage with the fifth passage.

9. The fluid control assembly according to claim 8, wherein the flow passage plate comprises a first wall and further comprises a first heat insulation groove and a second heat insulation groove,
the first heat insulation groove and the second heat insulation groove are formed by being recessed from the first wall inward away from the first wall in a direction perpendicular to the first wall, or the first heat insulation groove and the second heat insulation groove are configured to extend through the flow passage plate,
at least a part of the seventh passage and at least a part of the fifth passage are distributed along a periphery of the first heat insulation groove, and at least a part of the third passage and at least a part of the fourth passage are distributed along a periphery of the second heat insulation groove.

10. A heat management system, comprising a fluid control assembly, wherein the fluid control assembly is the fluid control assembly according to any one of claims 1 to 9, the heat management system comprises a condenser, an evaporator and an expansion element, the first passage is located after the condenser and before the expansion element, and the second passage is located after the evaporator.

11. The heat management system according to claim 10, wherein the fluid control assembly is provided with a plurality of connection ports, the first passage is butt-joint with and in communication with an inlet of the expansion element through one of the plurality of connection ports, an outlet of the expansion element is butt-jointed with and in communication with an inlet of the evaporator, and the second passage is in direct or indirect communication with an outlet of the evaporator through another of the plurality of connection ports.
